# EUROPEAN PATENT APPLICATION

(11) **EP 4 531 387 A1**
(43) Date of publication of application: **02.04.2025**
(21) Application number: 23909784.3
(22) Date of filing: 21.11.2023
(51) Int. Cl.: H04M 1/72439, G06F 3/0481, G06F 3/0488, H04M 1/72433, H04M 1/72442

(54) **MEDIA PLAYBACK METHOD AND DEVICE**

(30) Priority: 28.12.2022 CN 202211701475
(71) Applicant: Beijing Zitiao Network Technology Co., Ltd., Beijing 100190 (CN)
(72) Inventor: HU, Yangzhi, Beijing 100028 (CN); SUN, Jiayu, Beijing 100028 (CN)
(74) Representative: Isarpatent
(86) International application number: PCT/CN2023/132984
(87) International publication number: WO 2024/139852

(57) **Abstract**

The present disclosure provides a media playing method and device, the method comprising in the case that a first target multimedia is played, receiving a first trigger instruction for a first interactive control on a display interface; and in response to the first trigger instruction, playing a music corresponding to the first interactive control while displaying image content of the first target multimedia, so as to enable the user to switch to listening to the bound music when watching the first target multimedia, so that the user can truly resonate with the played multimedia content and user experience is improved.

## Description

### CROSS REFERENCE TO RELATED APPLICATION(S)

The present application claims priority to the Chinese patent application filed with the China National Intellectual Property Administration on December 28, 2022, with application No. 202211701475.4 entitled "Media Playing Method and Device", the entire disclosure of which is hereby incorporated by reference in its entirety.

### FIELD

Embodiments of the present disclosure relate to the field of image processing, and more particularly, to a media playing method and device.

### BACKGROUND

Media includes content such as video, images, or music. In the related art, a user may enter a corresponding application to watch a video or listen to music, and this way can satisfy the user requirements to a certain extent, but the related art does not support playing multiple types of multimedia content at the same time, thus resulting in the user limiting the user perception of the played multimedia content and reducing the user experience.

It can be seen that there is a need for a media playing method that can improve the user experience.

### SUMMARY

The embodiments of the present disclosure provide a media playing method and device to provide an improved user experience when multiple types of multimedia contents can be played simultaneously.

In a first aspect, embodiments of the present disclosure provide a media playing method, comprising: in the case that a first target multimedia is played, receiving a first trigger instruction for a first interactive control on a display interface; and in response to the first trigger instruction, playing a music corresponding to the first interactive control while displaying image content of the first target multimedia..

In a second aspect, embodiments of the present disclosure provide a media playing device comprising:
a receiving unit for in the case that a first target multimedia is played, receiving a first trigger instruction for a first interactive control on a display interface; and
an output unit for in response to the first trigger instruction, playing a music corresponding to the first interactive control while displaying image content of the first target multimedia.

In a third aspect, embodiments of the present disclosure provide an electronic device comprising: at least one processor and memory;
the memory stores computer execution instructions;
the at least one processor executes the memory-stored computer-executed instructions to cause the at least one processor to execute the media playing method as provided in the first aspect above.

In a fourth aspect, embodiments of the present disclosure provide a computer-readable storage medium having stored therein computer-executable instructions that, when executed by a processor, implement the media playing method as provided in the first aspect above.

In a fifth aspect, according to one or more embodiments of the present disclosure, there is provided a computer program product comprising computer executable instructions which, when executed by a processor, implement the media playing method as provided in the first aspect above.

A media playing method and device provided in the present embodiment receives a first trigger instruction for a first interactive control on a display interface in the case of playing a first target multimedia; in response to the first trigger instruction, playing a music corresponding to the first interactive control while displaying image content of the first target multimedia, so that the user can switch to listening to the bound music while watching the first target multimedia, thereby enabling the user to actually resonate for the played multimedia content, so as to improve the user experience.

### BRIEF DESCRIPTION OF THE DRAWINGS

In order to explain the embodiments of the present disclosure or the technical solutions in the prior art more clearly, a brief introduction will be given below to the accompanying drawings which are used in the description of the embodiments or the prior art; it is obvious that the drawings in the description below are some embodiments of the present disclosure, and other drawings can be obtained from these drawings by a person skilled in the art without involving any inventive effort.
Fig. 1 is an exemplary diagram of an application scenario provided by embodiments of the present disclosure;
Fig. 2 is a flowchart illustrating a media playing method according to embodiments of the present disclosure;
Fig. 3 is an exemplary diagram of a page provided by embodiments of the present disclosure;
FIG. 4 is an illustration of another page provided by embodiments of the present disclosure;
FIG. 5 is an exemplary diagram of an author page provided by embodiments of the present disclosure;
FIG. 6 is a structure block diagram of a media playing device provided by embodiments of the present disclosure;
Fig. 7 is a hardware structure diagram of an electronic device provided by embodiments of the present disclosure.

### DETAILED DESCRIPTION OF EMBODIMENTS

For the purposes, aspects, and advantages of embodiments of the present disclosure, reference will now be made in detail to the embodiments of the present disclosure, examples of which are illustrated in the accompanying drawings. It is to be understood that the present disclosure is to be considered an exemplary embodiment of the present disclosure, and not an exhaustive description of the embodiments of the present disclosure. Based on the embodiments in the present disclosure, all other embodiments obtained by a person of ordinary skill in the art without inventive effort are within the scope of the present disclosure.

In the related art, when the user listens to music, the expression of the music author and the user interaction with the author are separated. For example, for a user listening to music, the user may play the music through a music application, may comment on the music or browse the lyrics of the music while playing the music, and may not see the video that the music author expressed for the music. With regard to the expression of a music author, the music author may upload contents, such as music making-of, to a video application for a user to view. For a user to interact with the author, the user is required to discuss the music with the author in an application having a communication function. Such stripping may limit the user perception of music and may also limit the author expression of music.

In order to solve the above-mentioned problem, the embodiments of the present disclosure proposes a media playing method comprising in the case that a first target multimedia is played, receiving a first trigger instruction for a first interactive control on a display interface; and in response to the first trigger instruction, playing a music corresponding to the first interactive control while displaying image content of the first target multimedia. The method can achieve that when a user listens to music, the image content of the first target multimedia can be viewed, so as to improve the user perception of the music

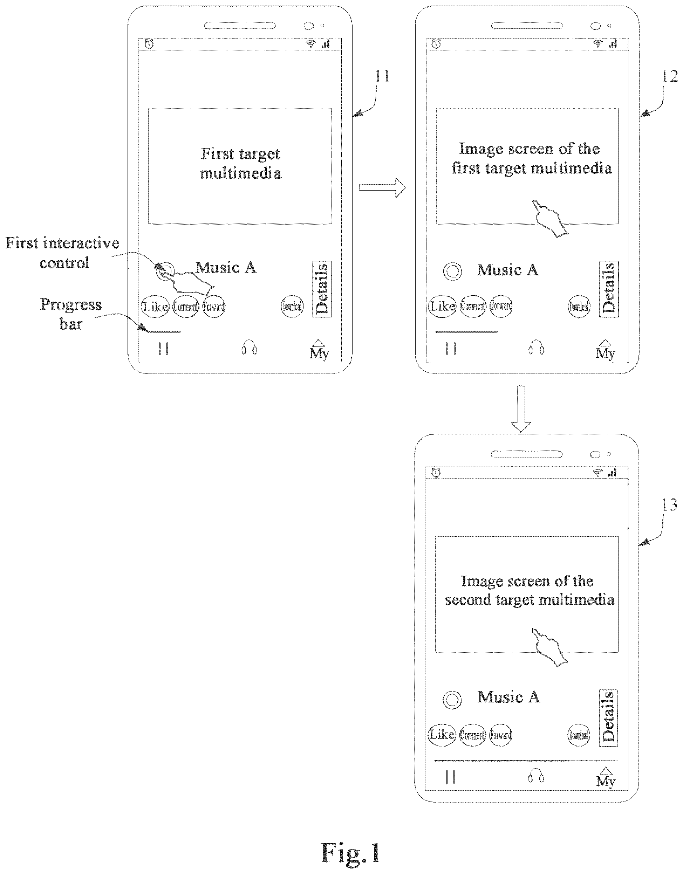

Referring to FIG. 1, an exemplary diagram of an application scenario provided by the embodiments of the present disclosure is shown. As shown in FIG. 1, the embodiments of the present disclosure may be applicable in a play scene of media. In the scenario, the user may trigger an application identifier of an application (such as an application which can play media content) on a desktop of a terminal device, and enter the application; in the application, if entering the page 11 to play a first target multimedia (a display interface of the terminal device displays image content of the first target multimedia, and a speaker of the terminal device plays audio content of the first target multimedia), the user triggers a first interactive control on the page 11, and a corresponding music name (such as music A) is displayed next to the first interactive control, and may enter the page 12; there is no specific difference between the page 12 and the page 11, and the progress bar in the page 11 may represent the playing progress of the first target multimedia, and the display interface in the page 12 displays the image content of the first target multimedia but the music A is played by the speaker of the terminal device. Here, the music A may be pre-bound with the first target multimedia, so that the user may watch multimedia content related to the music while listening to the music.

The above-mentioned application scene is only one of example scenes, and the embodiments of the present disclosure may also be applied to playing scenes of various media contents, such as playing music when displaying images, and also playing bound audio contents when displaying images, without being limited thereto.

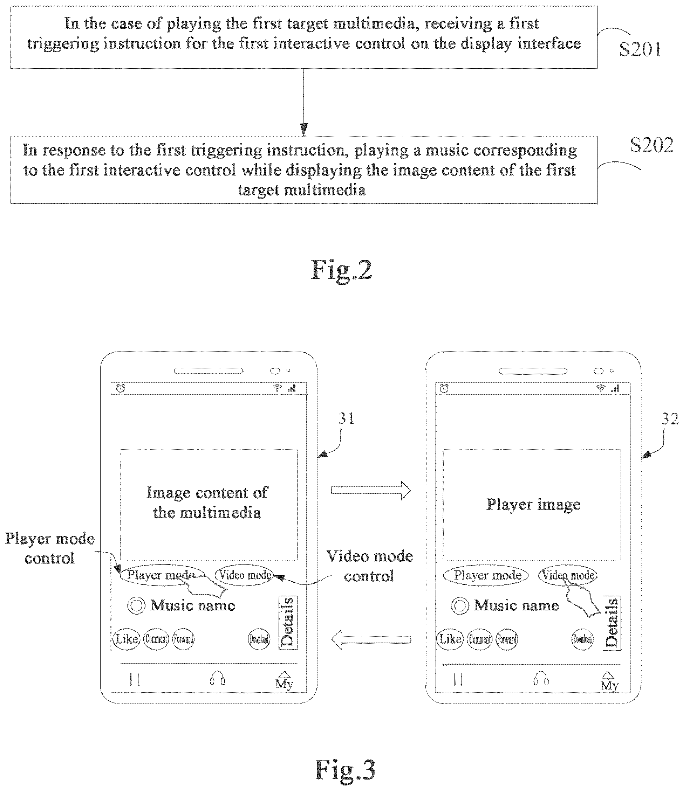

Referring to FIG. 2, a flow diagram of a media playing method provided by the embodiments of the present disclosure is shown. As shown in FIG. 2, the media playing method comprises:
S201, in the case that a first target multimedia is played, receiving a first trigger instruction for a first interactive control on a display interface.

The media content may include an image or a video.

In the disclosed embodiment, if the first target multimedia is a video, then playing the first target multimedia is displaying image content of the first target multimedia on a display interface, and using a speaker to play audio content of the first target multimedia. If the first target multimedia is an image, then playing the first target multimedia is displaying the image on the display interface.

Further, the first target multimedia includes: multimedia content related to music or multimedia content related to an author of music.

Wherein the multimedia content related to music comprises: a relevant video of the music production process, a music making-of, etc. The author-related multimedia content may be a video or an image uploaded by the author, which may be content related to the life of the author, or may be an expression of the author understanding of music, etc.

S202, in response to the first trigger instruction, playing the music corresponding to the first interactive control while the image content of the first target multimedia is displayed.

Here, referring to FIG. 1, in the page 12, a speaker may play the music corresponding to the first interactive control while displaying image content of the first target multimedia on the display interface.

Specifically, when the music is played, the image content of the first target multimedia may be displayed cyclically, or the image content of the first target multimedia may be displayed completely, and then the image content of the next multimedia bound to the music may be displayed.

In the present disclosure, a video stream may be introduced into a music stream, or a music stream may be introduced into a video stream, enriching the playing form of media content. If the image content is displayed when the music is played, the image-building of the author can be realized, and functions such as commenting, forwarding or downloading may be set on the display interface, so that the user can interact with the author. In addition, the video stream may come from a social media of the author, which in turn may transform the social media hobbyist of the author into the music hobbyist of the author. Further, if the first target multimedia is a video related to the music, the user can be made more aware of the production process behind the music and can easily resonate with the music.

Further, in the case that the image content of the first target multimedia is displayed and the music is played, receiving a second trigger instruction for the image content which is currently displayed; and in response to the second trigger instruction, playing the first target multimedia, wherein playing the first target multimedia comprises: displaying the image content and playing audio content of the first target multimedia.

In the present disclosure, referring to FIG. 1, the user may click on the image content being displayed on the page 12 and the page 12 may switch to playing the first target multimedia, pausing the playing of the music so that the user listens to the audio content of the first target multimedia.

In an alternative embodiment, in the case that the image content of the first target multimedia is displayed and the music is played, receiving a switching instruction for the image content which is currently displayed; and in response to the switching instruction, displaying image content of a second target multimedia, the second target multimedia being multimedia bound to the music.

Here, the user may slide on the displayed image content to switch the played multimedia. For example, it is possible to switch from displaying the image content of the first target multimedia to displaying the image content of the second target multimedia by sliding down or right. Referring to FIG. 1, the page 12 may be switched to the page 13 by sliding on the image content being displayed on page 12 to display the image content of the second target multimedia, wherein the speaker still plays the music while displaying the image content of the second target multimedia, and then switches on the image content of the second target multimedia to switch to display the image content of another target multimedia bound to the music. It is further achieved that a plurality of multimedia may be bound to the music in advance, and when the music is played, image contents of each multimedia may be displayed in turn, so that the user can more easily perceive the music.

In an alternative embodiment, in the case that the image content of the first target multimedia is displayed and the music is played, receiving a third trigger instruction for a player mode control; and in response to the third trigger instruction, switching to a player mode, and displaying a player image corresponding to the music.

After switching to the player mode and displaying the player image corresponding to the music in response to the third trigger instruction, the method further comprising: receiving a fourth trigger instruction for a video mode control; and in response to the fourth trigger instruction, switching to a video mode, and displaying image content of a multimedia corresponding to the music.

Wherein a "player mode control" and a "video mode control" may be set on the page, wherein triggering the "player mode control" may switch the music to be played in the player mode, wherein the player mode may be understood as a music playing mode adopted by a current music application, namely, the user may browse a cover corresponding to the music, lyrics and other information about the music in the player mode. If the user triggers the "video mode control", the music may be switched to the video mode for playing, and in the video mode, the user may listen to the music while watching the image content of the music-bound multimedia.

Referring to FIG. 3, the player mode control and the video mode control are contained in a page 31, and after the user triggers the player mode control, the player mode is entered, and a page 32 is switched to, and a player image is displayed in the page 32, wherein the player image is a previously set image for the music, such as a cover image. In addition, in the page 32, after the user triggers the video mode control, the user enters video mode and the page is switched to the page 31.

In some embodiments, the first target multimedia is a multimedia of a first type, and the media playing method further comprises: in the case that the image content of the first target multimedia is displayed and the music is played, receiving a fifth trigger instruction for a control of a second type; and in response to the fifth trigger instruction, displaying image content of the second type of a multimedia corresponding to the music.

Wherein in response to the first type comprising a custom type, the second type comprises a music short video type; in response to the first type comprising the music short video type, the second type comprises a custom type, the custom type comprising a type associated with the music or a type associated with an author of the music.

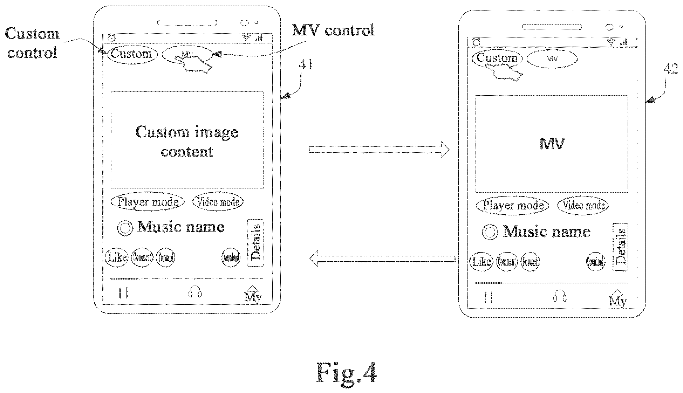

Further, in the video mode, a first type control, which may be a custom control as shown in FIG. 4, and a second type control, which may be an MV (Music Video) control as shown in FIG. 4, may be added. Illustratively, with reference to FIG. 4, triggering an MV control on the page 41 may switch the page to the page 42 to display the image content of the MV of the music as it is played. On the page 42, the custom control is triggered to switch the page to the page 41 to display image content of a custom type of the multimedia including the aforementioned music-related multimedia or music author-related multimedia while the music is being played. In response to triggering the second type control, the image content of the MV of the music may be displayed.

In some embodiments of the present application, a user is able to switch between the player mode and the video mode, and is also able to switch between the customized multimedia and the MV, so as to enable the user to listen to music in various ways and improve the user experience.

Further, receiving a sixth trigger instruction to enter an author home page; and in response to the sixth trigger instruction, displaying the author home page corresponding to the music, wherein a pre-set position of the author home page displays multimedia content of the author.

In embodiments of the present application, an interactive control entering the home page of the author may be provided on any page where the music is played, and the user may enter the home page of the author when the interactive control is triggered.

Receiving a seventh trigger instruction to an image control on the author home page; and in response to the seventh triggering instruction, displaying an image of the author at the pre-set position.

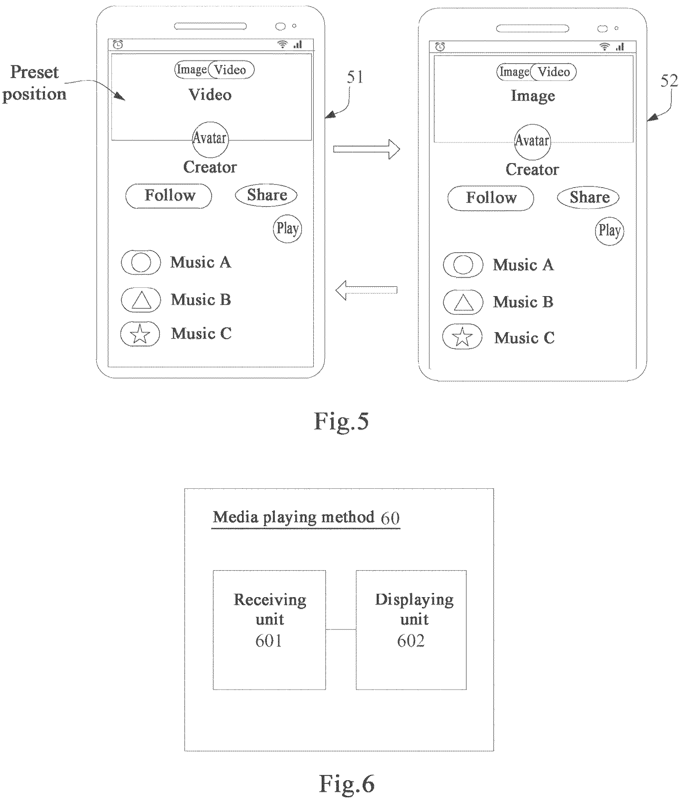

Referring to FIG. 5, there are an image control and a video control at a pre-set position on the home page 51 of the author, and when the video control is clicked, the pre-set position displays the corresponding multimedia content, such as a video, of the author, wherein the video may be a short video uploaded by the author for expressing himself, and the user may also trigger the video to be viewed in full screen. When the image control is clicked, the page is switched to the home page 52 of the author, and an image of the author is displayed at the pre-set position, and the object contained in the image may be the author. In addition, the author home page also includes the author avatar, author name, following control, sharing control and playing control, etc. Further, there is a music list of the author, and the user may trigger any music to play it.

In the present disclosure, in an innovative way of imparting short video to music streaming media, content that is strongly related to music or that is related to the author, published by the author on social media, is distributed in the music stream, so that the user really resonates music and knows the author.

Corresponding to the media playing method of the above embodiment, FIG. 6 is a structure diagram of the playing device 60 provides by the embodiments of the present disclosure. For ease of explanation, only the portions relating to the embodiments of the present disclosure are shown. With reference to FIG. 6, a media playing device comprises: A receiving unit 601 and an output unit 602, wherein:
the receiving unit is used for in the case that a first target multimedia is played, receiving a first trigger instruction for a first interactive control on a display interface;
the output unit is used for in response to the first trigger instruction, playing a music corresponding to the first interactive control while displaying image content of the first target multimedia.

In some embodiments, the receiving unit 601 is also used for: in the case that the image content of the first target multimedia is displayed and the music is played, receiving a second trigger instruction for the image content which is currently displayed. The output unit 602 is also used for: playing the first target multimedia in response to the second trigger instruction, the playing of the first target multimedia comprising: displaying the image content and playing the audio content of the first target multimedia.

In some embodiments, the first target multimedia comprises: a multimedia related to the music or a multimedia related to an author of the music.

In some embodiments, the receiving unit 601 is also used for: in the case that the image content of the first target multimedia is displayed and the music is played, receiving a switching instruction for the image content which is currently displayed; the output unit 602 is also used for: in response to the switching instruction, displaying image content of a second target multimedia, the second target multimedia being multimedia bound to the music.

In some embodiments, the receiving unit 601 is also used for: in the case that the image content of the first target multimedia is displayed and the music is played, receiving a third trigger instruction for a player mode control; the output unit 602 is also used for: in response to the third trigger instruction, switching to a player mode, and displaying a player image corresponding to the music.

In some embodiments, the receiving unit 601 is also used for: after switching to the player mode and displaying the player image corresponding to the music in response to the third trigger instruction, receiving a fourth trigger instruction for a video mode control; the output unit 602 is also used for: in response to the fourth trigger instruction, switching to a video mode, and displaying image content of a multimedia corresponding to the music.

In some embodiments, the first target multimedia is multimedia of a first type, and the receiving unit 701 is also used for: in the case that the image content of the first target multimedia is displayed and the music is played, receiving a fifth trigger instruction for a control of a second type; the output unit 602 is also used for: in response to the fifth trigger instruction, displaying image content of the second type of a multimedia corresponding to the music.

In some embodiments, in response to the first type comprising a custom type, the second type comprises a music short video type; in response to the first type comprising the music short video type, the second type comprises a custom type, the custom type comprising a type associated with the music or a type associated with an author of the music.

In some embodiments, the receiving unit 601 is also used for: receiving a sixth trigger instruction to enter an author home page; the output unit 602 is also used for: in response to the sixth trigger instruction, displaying the author home page corresponding to the music, wherein a pre-set position of the author home page displays multimedia content of the author.

In some embodiments, the receiving unit 601 is also used for: receiving a seventh trigger instruction to an image control on the author home page; the output unit 602 is also used for: in response to the seventh triggering instruction, displaying an image of the author at the pre-set position.

The present embodiment provides a media playing device which can be used to execute the technical solution of the embodiment of the above-mentioned media playing method, and the implementation principles and technical effects thereof are similar, and the present embodiment will not be described in detail herein.

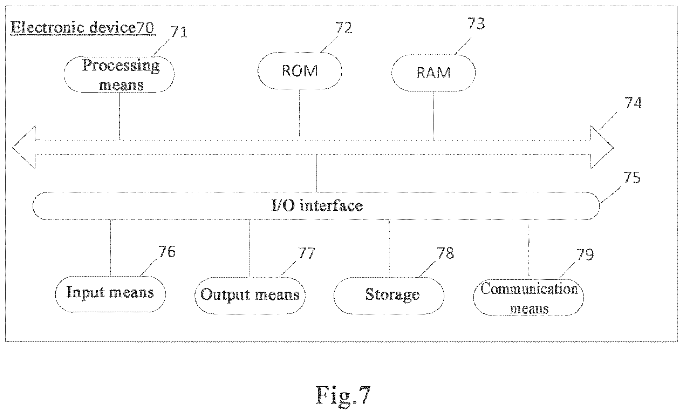

Referring to FIG. 7, a block diagram of an electronic device 70, which may be a terminal device or a server, suitable for implementing embodiments of the present disclosure is shown. Here, the terminal device may include, but is not limited to, a mobile terminal such as a mobile phone, a notebook computer, a digital broadcast receiver, a Personal Digital Assistant (PDA), a Portable Android Device (PAD), a Portable Media Player (PMP), an in-vehicle terminal (e.g., an in-vehicle navigation terminal), etc. and a fixed terminal such as a digital TV, a desktop computer, etc. The electronic device shown in FIG. 7 is merely an example and should not impose any limitations on the functionality and scope of use of embodiments of the present disclosure.

As shown in FIG. 7, electronic device 70 may include a processing apparatus 71 (e.g., central processing unit, graphics processor, etc.) that may perform various appropriate actions and processes in accordance with programs stored in Read Only Memory (ROM) or loaded from storage device 78 into Random Access Memory (RAM) 73. In the RAM 73, various programs and data required for the operation of the electronic device 70 are also stored. The processing apparatus 71, the ROM 72, and the RAM 73 are connected to each other via a bus 74. An input/output (I/O) interface 85 is also connected to bus 74.

In general, the following devices may be connected to the I/O interface 75: an input device 76 including, for example, a touch screen, a touch pad, a keyboard, a mouse, a camera, a microphone, an accelerometer, a gyroscope, etc.; an output device 87 including, for example, a Liquid Crystal Display (LCD), a speaker, a vibrator, and the like; A storage device 78 including, for example, a magnetic tape, a hard disk, etc.; and a communication device 79. The communication means 79 may allow the electronic device 70 to communicate wirelessly or wired with other devices to exchange data. While FIG. 7 illustrates an electronic device 70 having various means, it is to be understood that not all illustrated means are required to be implemented or provided. More or fewer devices may alternatively be implemented or provided.

In particular, the processes described above with reference to flow diagrams may be implemented as computer software programs in accordance with embodiments of the present disclosure. For example, embodiments of the present disclosure include a computer program product comprising a computer program embodied on a computer-readable medium, the computer program comprising program code for performing the methods illustrated by the flowcharts. In such embodiments, the computer program may be downloaded and installed from a network via communication means 79, or from storage 78, or from ROM 72. When the computer program is executed by the processing means 71, the above-described functions defined in the method of the embodiment of the present disclosure are performed.

Note that the computer-readable medium described above in this disclosure can be either a computer-readable signal medium or a computer-readable storage medium, or any combination of the two. The computer-readable storage medium can be, for example but not limited to, an electronic, magnetic, optical, electromagnetic, infrared, or semiconductor system, device, or device, or a combination of any of the above. More specific examples of the computer-readable storage medium may include, but are not limited to: an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the above. In this disclosure, a computer-readable storage medium can be any tangible medium that contains or stores a program that can be used by or in connection with an instruction execution system, device, or device. In this disclosure, a computer-readable signal medium may comprise a data signal embodied in baseband or propagated as part of a carrier wave carrying computer-readable program code. Such propagated data signals may take many forms, including but not limited to, electromagnetic signals, optical signals, or any suitable combination of the preceding. The computer-readable signal medium can also be any computer-readable medium other than a computer-readable storage medium that can send, propagate, or transport the program for use by or in connection with the instruction execution system, device, or device. The program code embodied on the computer-readable medium may be transmitted over any suitable medium including, but not limited to: wire, fiber optic cable, RF (radio frequency), and the like, or any suitable combination of the foregoing.

The computer readable medium may be contained in the electronic device; it may also be present separately and not fitted into the electronic device.

The computer-readable medium carries one or more programs which, when executed by the electronic device, cause the electronic device to perform the methods of the embodiments described above.

Computer program code for carrying out operations of the present disclosure may be written in one or more programming languages, including object oriented programming languages such as Java, Smalltalk, C++ and conventional procedural programming languages, such as the "C" language or similar programming languages, or a combination thereof. The program code may execute entirely on the user's computer, partly on the user computer, as a stand-alone software package, partly on the user computer partly on a remote computer or entirely on the remote computer or server. In the case of a remote computer, the remote computer may be connected to the user computer through any kind of network, including a Local Area Network (LAN) or a Wide Area Network (WAN), or may be connected to an external computer (e.g., through the Internet using an Internet Service Provider).

The flowcharts and block diagrams in the FIGs illustrate the architecture, functionality, and operation of possible implementations of systems, methods and computer program products according to various embodiments of the present disclosure. In this regard, each block in the flowchart or block diagrams may represent a unit, segment, or portion of code, which comprises one or more executable instructions for implementing the specified logical function(s). It should also be noted that in some alternative implementations, the functions noted in the blocks may occur out of the order noted in the FIGs. For example, two blocks shown in succession may in fact be executed substantially concurrently or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems which perform the specified functions or operations, or combinations of special purpose hardware and computer instructions.

The elements described in connection with the embodiments disclosed herein may be implemented in software or hardware. Where the name of the unit does not in some cases constitute a limitation on the unit itself, for example, the first acquisition unit may also be described as "a unit acquiring at least two internet protocol addresses".

The functions described herein above may be performed, at least in part, by one or more hardware logic components. For example, without limitation, exemplary types of hardware logic components that may be used include: field Programmable Gate Arrays (FPGAs), application Specific Integrated Circuits (ASICs), application Specific Standard Products (ASSPs), systems on a Chip (SOCs), complex Programmable Logic Devices (CPLDs), and the like.

In the context of this disclosure, a machine-readable medium can be a tangible medium that can contain or store a program for use by or in connection with an instruction execution system, device, or device. The machine-readable medium may be a machine-readable signal medium or a machine-readable storage medium. The machine-readable medium may include, but is not limited to, an electronic, magnetic, optical, electromagnetic, infrared, or semiconductor system, device, or device, or any suitable combination of the preceding. More specific examples of a machine-readable storage medium would include an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage device, a magnetic storage device, or any suitable combination of the preceding.

In a first aspect, according to one or more embodiments of the present disclosure, a media playing method is provided, comprising: in the case that a first target multimedia is played, receiving a first trigger instruction for a first interactive control on a display interface; and in response to the first trigger instruction, playing a music corresponding to the first interactive control while displaying image content of the first target multimedia.

According to one or more embodiments of the present disclosure, further comprising: in the case that the image content of the first target multimedia is displayed and the music is played, receiving a second trigger instruction for the image content which is currently displayed; and in response to the second trigger instruction, playing the first target multimedia, wherein playing the first target multimedia comprises: displaying the image content and playing audio content of the first target multimedia..

According to one or more embodiments of the present disclosure, the first target multimedia comprises: a multimedia related to the music or a multimedia related to an author of the music.

According to one or more embodiments of the present disclosure, further comprising: in the case that the image content of the first target multimedia is displayed and the music is played, receiving a switching instruction for the image content which is currently displayed; and in response to the switching instruction, displaying image content of a second target multimedia, the second target multimedia being multimedia bound to the music..

According to one or more embodiments of the present disclosure, further comprising: in the case that the image content of the first target multimedia is displayed and the music is played, receiving a third trigger instruction for a player mode control; and in response to the third trigger instruction, switching to a player mode, and displaying a player image corresponding to the music.

According to one or more embodiments of the present disclosure, after switching to the player mode and displaying the player image corresponding to the music in response to the third trigger instruction, further comprising: receiving a fourth trigger instruction for a video mode control; and in response to the fourth trigger instruction, switching to a video mode, and displaying image content of a multimedia corresponding to the music.

According to one or more embodiments of the present disclosure, the first target multimedia is a first type of multimedia, a media playing method, further comprising: in the case that the image content of the first target multimedia is displayed and the music is played, receiving a fifth trigger instruction for a control of a second type; and in response to the fifth trigger instruction, displaying image content of the second type of a multimedia corresponding to the music..

According to one or more embodiments of the present disclosure, in response to the first type comprising a custom type, the second type comprises a music short video type; in response to the first type comprising the music short video type, the second type comprises a custom type, the custom type comprising a type associated with the music or a type associated with an author of the music.

According to one or more embodiments of the present disclosure, further comprising: receiving a sixth trigger instruction to enter an author home page; and in response to the sixth trigger instruction, displaying the author home page corresponding to the music, wherein a pre-set position of the author home page displays multimedia content of the author..

According to one or more embodiments of the present disclosure, further comprising: receiving a seventh trigger instruction to an image control on the author home page; and in response to the seventh triggering instruction, displaying an image of the author at the pre-set position.

In a second aspect, according to one or more embodiments of the present disclosure, there is provided a media playing device comprising:
a receiving unit for in the case that a first target multimedia is played, receiving a first trigger instruction for a first interactive control on a display interface; and
an output unit for in response to the first trigger instruction, playing a music corresponding to the first interactive control while displaying image content of the first target multimedia.

In a third aspect, according to one or more embodiments of the present disclosure, there is provided an electronic device comprising: at least one processor and memory;
the memory storing computer executed instructions;
the computer-executed instructions, when executed by the at least one processor, causing the at least one processor to perform the media playing method as provided in the first aspect above.

In a fourth aspect, according to one or more embodiments of the present disclosure, there is provided a computer-readable storage medium, wherein the computer-readable storage medium stores computer-executable instructions which, when executed by a processor, implement the media playing method as provided in the first aspect above.

In a fifth aspect, according to one or more embodiments of the present disclosure, there is provided a computer program product comprising computer executable instructions which, when executed by a processor, implement the media playing method as provided in the first aspect above.

The foregoing description is only a preferred embodiment of the disclosure and is illustrative of the principles of the technology employed. It will be appreciated by those skilled in the art that the scope of the present disclosure is not limited to any particular combination of the features described above, but is intended to encompass any combination of the features described above or their equivalents without departing from the spirit of the disclosure. For example, the above-mentioned features and the technical features disclosed in the present disclosure (but not limited to) having similar functions are interchanged to form a technical solution.

Further, while operations are depicted in a particular order, this should not be understood as requiring that the operations be performed in the particular order shown or in sequential order. In certain circumstances, multitasking and parallel processing may be advantageous. As such, while several specific implementation details have been included in the above discussion, these should not be construed as limiting the scope of the present disclosure. Certain features that are described in the context of separate embodiments may also be implemented in combination in a single embodiment. Conversely, various features that are described in the context of a single embodiment can also be implemented in multiple embodiments separately or in any suitable sub-combination.

Although the subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A media playing method, comprising:
in the case that a first target multimedia is played, receiving a first trigger instruction for a first interactive control on a display interface; and
in response to the first trigger instruction, playing a music corresponding to the first interactive control while displaying image content of the first target multimedia.

2. The media playing method according to claim 1, further comprising:
in the case that the image content of the first target multimedia is displayed and the music is played, receiving a second trigger instruction for the image content which is currently displayed; and
in response to the second trigger instruction, playing the first target multimedia, wherein playing the first target multimedia comprises: displaying the image content and playing audio content of the first target multimedia.

3. The media playing method according to claim 1, wherein the first target multimedia comprises: a multimedia related to the music or a multimedia related to an author of the music.

4. The media playing method according to any one of claims 1 to 3, further comprising:
in the case that the image content of the first target multimedia is displayed and the music is played, receiving a switching instruction for the image content which is currently displayed; and
in response to the switching instruction, displaying image content of a second target multimedia, the second target multimedia being multimedia bound to the music.

5. The media playing method according to any one of claims 1 to 3, further comprising:
in the case that the image content of the first target multimedia is displayed and the music is played, receiving a third trigger instruction for a player mode control; and
in response to the third trigger instruction, switching to a player mode, and displaying a player image corresponding to the music.

6. The media playing method according to claim 5, after switching to the player mode and displaying the player image corresponding to the music in response to the third trigger instruction, the method further comprising:
receiving a fourth trigger instruction for a video mode control; and
in response to the fourth trigger instruction, switching to a video mode, and displaying image content of a multimedia corresponding to the music.

7. The media playing method according to claim 1, wherein the first target multimedia is a multimedia of a first type, and the media playing method further comprises:
in the case that the image content of the first target multimedia is displayed and the music is played, receiving a fifth trigger instruction for a control of a second type; and
in response to the fifth trigger instruction, displaying image content of the second type of a multimedia corresponding to the music.

8. The media playing method according to claim 7, wherein in response to the first type comprising a custom type, the second type comprises a music short video type; in response to the first type comprising the music short video type, the second type comprises a custom type, the custom type comprising a type associated with the music or a type associated with an author of the music.

9. The media playing method according to any one of claims 1 to 3, further comprising:
receiving a sixth trigger instruction to enter an author home page; and
in response to the sixth trigger instruction, displaying the author home page corresponding to the music, wherein a pre-set position of the author home page displays multimedia content of the author.

10. The media playing method according to claim 9, further comprising:
receiving a seventh trigger instruction to an image control on the author home page; and
in response to the seventh triggering instruction, displaying an image of the author at the pre-set position.

11. A media playing device, comprising:
a receiving unit for in the case that a first target multimedia is played, receiving a first trigger instruction for a first interactive control on a display interface; and
an output unit for in response to the first trigger instruction, playing a music corresponding to the first interactive control while displaying image content of the first target multimedia.

12. An electronic device, comprising:
at least one processor and memory;
the memory storing computer-executed instructions;
the computer-executed instructions, when executed by the at least one processor, causing the at least one processor to perform the media playing method according to any one of claims 1 to 10.

13. A computer-readable storage medium, wherein the computer-readable storage medium stores computer-executable instructions which, when executed by a processor, implement the media playing method of any one of claims 1 to 10.
